# EUROPEAN PATENT APPLICATION

(11) **EP 4 671 316 A1**
(43) Date of publication of application: **31.12.2025**
(21) Application number: 25765940.9
(22) Date of filing: 22.01.2025
(51) Int. Cl.: C08J 11/08, B29B 17/00

(54) **METHOD FOR PREPARING RECYCLED POLYMERS**

(30) Priority: 04.03.2024 KR 20240030453; 20.01.2025 KR 20250007711
(71) Applicant: LG Chem, Ltd., Seoul 07336 (KR); Chungbuk National University Industry-Academic Cooperation Foundation, Cheongju-si, Chungcheongbuk-do 28644 (KR)
(72) Inventor: LIM, Yong Chan, Daejeon 34122 (KR); RYU, Sang Woog, Sejong 30098 (KR); PARK, Jong Suh, Daejeon 34122 (KR); OH, Hyun Taek, Daejeon 34122 (KR); LEE, Sang Ho, Daejeon 34122 (KR); KIM, Jun Sik, Daejeon 34122 (KR); SHIN, Dong Jin, Cheongju-si Chungcheongbuk-do 28665 (KR); GU, Un Gi, Cheongju-si Chungcheongbuk-do 28611 (KR)
(74) Representative: Hoffmann Eitle
(86) International application number: PCT/KR2025/001179
(87) International publication number: WO 2025/187960

(57) **Abstract**

Provided is a method of preparing a recycled polymer including: (S1) supplying cycloalkyl alkyl ether as a solvent to a dissolution tank and a precipitation tank, respectively; (S2) supplying a composite resin to the dissolution tank, heating to a dissolution temperature, and dissolving a polymer included in the composite resin while maintaining the dissolution tank at the dissolution temperature to obtain a polymer solution; (S3) supplying the polymer solution to the precipitation tank in which the solvent is maintained at a precipitation temperature and precipitating the polymer included in the polymer solution to obtain a solution including a polymer precipitate; and (S4) filtering the solution including the polymer precipitate to obtain the polymer precipitate.

## Description

### [Technical Field]

### CROSS-REFERENCE TO RELATED APPLICATIONS

The present application claims the benefit of priorities to Korean Patent Application No. 10-2024-0030453, filed on March 4, 2024, and Korean Patent Application No. 10-2025-0007711, filed on January 20, 2025, the entire contents of which are incorporated herein as a part of the specification.

### Technical Field

The present invention relates to a method for preparing recycled polymers, and more particularly, to a method for preparing recycled polymers, which may minimize a residual amount of a solvent used when recovering a polymer from waste resins.

### [Background Art]

Recently, since resin materials having physical properties required for various uses and purposes have been developed, the use of polymer materials such as resins or plastics is increasing. In general, resins or plastics use a great amount of energy from crude oil collection to manufacture, and a large amount of carbon is discharged in the process. Furthermore, in the case in which a final product is discarded and resins or plastics included in the product are also discarded, social costs for environmental pollution and the treatment thereof are incurred. Thus, it is essential to recycle waste resins in order to reduce energy consumption, reduce carbon emission, and prevent environmental pollution.

Meanwhile, the waste resin may be a resin of a composite material or a single resin. The resin of a composite material is in a state of two or more resins being blended, and since the single resin contains an additive (such as plasticizers, fillers, flame retardants, stabilizers, filling agents, foaming agents, viscosity reducing agents, colorants, and heat stabilizers) used for importing desired physical properties, it may be difficult to recycle the single resin by a physical method.

Accordingly, methods of recovering a polymer from a waste resin by a chemical method and recycling the polymer are being performed. For example, a polymer included in the waste resin is selectively dissolved in a good solvent to obtain a polymer solution, and the good solvent included in the polymer solution is evaporated or the polymer solution is brought into contact with an antisolvent to recrystallize the solution, thereby preparing a recycled polymer.

Since the recycling technology by dissolution and recrystallization recovers a polymer without decomposing the polymer while maintaining the physical properties by increasing the purity of the polymer, it reduces carbon emissions. However, since the good solvent which dissolves the polymer and the antisolvent which precipitates the polymer are mixed, the two used solvents should be separated, respectively, for reusing them later.

Thus, in order to avoid the use of the antisolvent in the recrystallization step, a method of precipitating the polymer by lowering the temperature of the solvent dissolved in the polymer has recently been attracting attention. However, since the polymer precipitated by self-cooling of the polymer solution contains a large amount of the solvent, an additional process for removing the solvent by evaporation is involved, and a great amount of energy is consumed in the process.

### [Disclosure]

### [Technical Problem]

In order to solve the problems mentioned in the Background Art, an object of the present invention is to provide a method for preparing recycled polymers, which may minimize energy consumed for removing a solvent, by lowering a solvent residual amount contained in a polymer precipitated by the recrystallization while using the same solvent during dissolution and recrystallization when recovering the polymer from waste resins.

### [Technical Solution]

In one general aspect, a method for preparing recycled polymers includes: (S1) supplying cycloalkyl alkyl ether as a solvent to a dissolution tank and a precipitation tank, respectively; (S2) supplying a composite resin to the dissolution tank, heating to a dissolution temperature, and dissolving a polymer included in the composite resin while maintaining the dissolution tank at the dissolution temperature to obtain a polymer solution; (S3) supplying the polymer solution to the precipitation tank in which the solvent is maintained at a precipitation temperature and precipitating the polymer included in the polymer solution to obtain a solution including a polymer precipitate; and (S4) filtering the solution including the polymer precipitate to obtain the polymer precipitate.

### [Advantageous Effects]

According to the present invention, cycloalkyl alkyl ether is used as the same solvent supplied to a dissolution tank and a precipitation tank for recovering a polymer included in a composite resin derived from a waste resin, thereby improving a precipitation speed of a polymer dissolved in the precipitation tank maintained at a low temperature after sufficiently dissolving the polymer at a high temperature at or above a boiling point of the solvent in the dissolution tank. That is, since the cycloalkyl alkyl ether has a decreased affinity for a polymer at a low temperature while having sufficient solubility in a polymer at a temperature near a boiling point, a precipitation effect of a polymer is excellent. In addition, a polymer precipitate obtained in the precipitation tank may have a low solvent residual amount to minimize energy consumed for solvent removal.

Further, the present invention may reduce energy consumed for lowering a polymer solution at a high temperature, by separately performing a dissolution step and a recrystallization step of the polymer in the dissolution tank and the precipitation tank, respectively.

Additionally, since the same solvent is supplied to the dissolution tank and the precipitation tank, the solvent remaining after obtaining a final polymer precipitate may be reused directly in the dissolution tank and the precipitation tank, without a separate separation process. Thus, process simplification and cost reduction are achieved, which is favorable from an economic perspective.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

Hereinafter, the present invention will be described in more detail for better understanding of the present invention.

The method for preparing recycled polymers according to an exemplary embodiment of the present invention may include (S1) supplying the same solvent to a dissolution tank and a precipitation tank; (S2) dissolving a polymer included in a composite resin; (S3) precipitating by recrystallizing the dissolved polymer; and (S4) obtaining a polymer precipitate.

The composite resin used in the present invention is derived from a waste resin and may be obtained by pretreating the waste resin. The waste resin may be recovered from various products molded using a resin or the composition thereof or the use thereof regardless of whether it is hard or soft. In addition, the composite resin obtained by pretreating the waste resin may be a single kind of polymer containing an additive, or a resin composition in which two or more polymers are blended. Meanwhile, the pretreatment refers to the whole process of treating the waste resin into a state appropriate for being applied to the method for preparing recycled polymers of the present invention. For example, the pretreatment may be a process of washing the waste resin with a solvent such as water to remove relatively large foreign matter such as dust, drying, and crushing. The crushing is favorably performed so that the dried waste resin has a uniform and consistent size of, for example, 1 mm to 5 cm. When the size of the crushed resin is less than 1 mm, its handling is difficult due to dust production, and when the size is more than 5 cm, it takes a long time to dissolve it in a polymer recovery process.

The composite resin after the pretreatment may include a polymer such as polyethylene, polypropylene, or a mixture thereof, and the polymer may be recovered from the composite resin and used as a recycled resin. The polyethylene is classified into a high-density polyethylene (HDPE), a medium-density polyethylene (MDPE), a low-density polyethylene (LDPE), a linear low-density polyethylene (LLDPE), a ultra-low-density polyethylene (VLDPE), and the like, according to the density, and may be used after being appropriately selected depending on the properties of the composite resin.

For example, the composite resin may include a polymer including polyethylene, polypropylene, or a mixture thereof in an amount of 40 to 99 wt% or 40 to 80 wt%, based on the weight of the composite resin.

The present invention is intended to prepare a recycled polymer by selectively recovering a polymer included in the composite resin, and may include, first, (S1) supplying cycloalkyl alkyl ether as a solvent to a dissolution tank and a precipitation tank, respectively.

Since the cycloalkyl alkyl ether has properties such as low heat of evaporation, hydrophobicity, and chemical stability, it may be applied as a solvent in a wide range from a low temperature to a high temperature, and may have a function of selectively dissolving a polymer requiring dissolution and also a function of maximizing precipitation ability in recrystallizing the dissolved polymer, in order to prepare the recycled polymer from the composite resin derived from a waste resin.

The cycloalkyl alkyl ether may improve a rate at which a polymer precipitate is formed, by increasing supersaturation using a wide temperature range when recrystallizing the dissolved polymer by selectively dissolving a target polymer at a high temperature and then lowering the temperature.

An example of the cycloalkyl alkyl ether which may be used in the present invention may include one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether. Among them, cyclopentyl methyl ether, cyclopentyl ethyl ether, and cyclohexyl ethyl ether may be favorably used, since they show particularly a low affinity for a polymer at a low temperature as compared with solubility at a high temperature.

In the present invention, a single solvent of cycloalkyl alkyl ether having the properties described above is used for dissolution and recrystallization of the polymer included in the composite resin, thereby overcoming the disadvantage of involving a separation process for further reuse due to mixing of two different solvents by the use of a good solvent which dissolves the polymer and an antisolvent which precipitates the polymer in the conventional technology.

The method for preparing recycled polymers according to an exemplary embodiment may include (S2) supplying the composite resin to the dissolution tank to which the cycloalkyl ether has been supplied in advance, heating to a dissolution temperature, and dissolving a polymer included in the composite resin while maintaining the dissolution tank at the dissolution temperature to obtain a polymer solution.

Specifically, the polymer solution may be obtained by bringing the composite resin into contact with the cycloalkyl alkyl ether solvent in the dissolution tank to selectively dissolve a target polymer to be recovered, for example, polyethylene, polypropylene, or a mixture thereof.

If necessary, the dissolution step in the dissolution tank may be performed under stirring in order to effectively disperse the composite resin in the solvent and increase resulting dissolution efficiency.

In an exemplary embodiment of the present invention, the dissolution temperature is a temperature maintained for selectively dissolving the polymer in the dissolution tank and may be a temperature at or above the boiling point of the solvent. Herein, the boiling point may refer to a boiling point under atmospheric pressure (1 atm).

In (S2), since the dissolution temperature is maintained at a temperature above the boiling point of the solvent, the pressure of the dissolution tank may be maintained in a state above the atmospheric pressure in order to prevent evaporation of the solvent in the dissolution tank. Herein, the pressure condition of the dissolution tank in a process of raising the temperature of the dissolution tank to the dissolution temperature may be maintaining atmospheric pressure until the temperature reaches the boiling point of the solvent and when the temperature reaches a temperature at or above the boiling point of the solvent, the temperature may be pressurized to the atmospheric pressure or higher. When the pressure of the dissolution tank is increased, the boiling point of the solvent increases together, and thus, even when the temperature is maintained at a temperature above the boiling point of the solvent, the solvent may dissolve the polymer without evaporating.

The pressure of the dissolution temperature in the dissolution tank may be atmospheric pressure to 3 bar. When the pressure in the dissolution tank is below atmospheric pressure, the solvent may evaporate and does not dissolve the polymer, and when the pressure is above 3 bar, a dissolution effect due to pressurization is insignificant and efficiency may be lowered.

Specifically, the dissolution temperature may be 90°C to 140°C. When the dissolution temperature is below 90°C, the temperature is low and the polymer may not be sufficiently dissolved. In addition, when the dissolution temperature is above 140°C, excessive energy is consumed in order to increase the temperature, and the dissolution efficiency of the polymer may be lowered as compared with the consumed energy amount.

Since the solvent has a relatively high boiling point property, it may function as a solvent in a wide temperature range. That is, in (S2), the dissolution temperature is maintained high to maximize the solubility of the polymer and dissolve the polymer, and the temperature of the polymer solution obtained as such may be lowered to easily precipitate the polymer.

Meanwhile, when the dissolution temperature is below the boiling point of the solvent, the polymer is not sufficiently dissolved to decrease the content of the polymer precipitated in a subsequent recrystallization step, and when the dissolution temperature is higher than the boiling point of the solvent by 10°C, heat loss occurs, which is disadvantageous in terms of energy.

In addition, the dissolution time in the dissolution tank may be 120 to 300 minutes. The dissolution time may refer to a time from when the composite resin is brought into contact with the solvent in the dissolution tank to when the polymer is dissolved in the solvent. When the dissolution time is less than 120 minutes, the polymer may not be completely dissolved, and when the dissolution time is more than 300 minutes, an energy consumption amount is increased, but the efficiency of obtaining the polymer may be low.

The polymer solution obtained in the dissolution tank may satisfy a polymer concentration in a predetermined range, by adjusting the dissolution temperature and the dissolution time as described above. For example, the content of the polymer included in the polymer solution may be 1 wt% or more, 5 wt% or more, or 8 wt% or more and 20 wt% or less, 15 wt% or less, or 13 wt% or less, based on the weight of the solution. When the content of the polymer dissolved in the polymer solution is less than 1 wt%, the amount of the finally prepared recycled polymer may be decreased. When the content of the polymer dissolved in the polymer solution is more than 20 wt%, viscosity is increased, so that it may be difficult to separate the dissolved polymer and an insoluble material.

In addition, the polymer solution obtained in the dissolution tank may be subjected to a filtration process in order to remove the insoluble material which is not dissolved in the solvent. The filtration may be performed by one or more of filtration by a filter, filtration by centrifugation, and filtration by settling. As an example, the polymer solution is passed through a filter such as a mesh strainer to separate the insoluble material, and a filtrate including the dissolved polymer may be used in a subsequent step.

In addition, the method for preparing recycled polymers according to an exemplary embodiment of the present invention may include: (S3) supplying the polymer solution to the precipitation tank in which the solvent is maintained at a precipitation temperature and precipitating the polymer included in the polymer solution to obtain a solution including a polymer precipitate.

In the present invention, in order to minimize energy consumption required for lowering the temperature for recrystallization of the polymer solution at a high temperature, recrystallization and precipitation of the polymer dissolved in the polymer solution are performed using a separate precipitation tank which is a different member from the dissolution tank which performs polymer dissolution.

Specifically, a precipitation step in which the polymer solution at a high temperature is added dropwise while stirring is performed, if necessary, in a state in which cycloalkyl alkyl ether is supplied to the precipitation tank in advance, thereby recrystallizing the polymer dissolved in the polymer solution by a temperature difference to form a precipitate may be performed. Herein, as a difference between the precipitation tank temperature and the dissolution tank temperature which was applied in the previous step is larger, the precipitation efficiency of the polymer may be increased.

To this end, in the present invention, cycloalkyl alkyl ether is used in both the dissolution tank and the precipitation tank, as a solvent which may be applied in a wide temperature range from high to low temperature as described above, the dissolution tank is heated to a high temperature at or above the boiling point of the solvent, and the precipitation tank is maintained in a low temperature range including room temperature, thereby maximizing the precipitation efficiency of the polymer.

In an exemplary embodiment of the present invention, the precipitation temperature may be controlled so that it may be maintained lower than the dissolution temperature by 70 to 130°C (that is, dissolution temperature - 70 to 130°C), specifically at a temperature of dissolution temperature - 80 to 120°C, and more specifically at a temperature of dissolution temperature - 95 to 115°C. That is, since the dissolution tank is heated and dissolution of the polymer is performed at or above the boiling point of the solvent, the upper limit of temperature of the polymer solution may be determined, and thus, precipitation efficiency by a temperature difference may be improved by controlling the temperature of the precipitation tank to which the polymer solution is supplied based on the dissolution temperature. For example, the precipitation temperature which is the temperature of the precipitation tank at which the polymer solution is added dropwise may be in a range of -40°C to 70°C, -20°C to 50°C, or 0°C to 30°C. When the precipitation temperature range is maintained, the temperature of the solvent in the precipitation tank is significantly lower than the temperature of the polymer solution obtained in the dissolution tank, and thus, precipitation by recrystallization of the polymer may be easy.

Cycloalkyl alkyl ether which is the solvent used for dissolution and precipitation of the polymer may be a material having a low affinity for the polymer. However, when the temperature of the solvent is raised to the dissolution temperature, it may be a material having an increased affinity for the polymer to dissolve the polymer. Therefore, in the present invention, the temperature is raised to the dissolution temperature and the polymer is dissolved in the solvent to obtain the polymer solution in the dissolution tank, and the polymer solution is added dropwise to the precipitation tank at a low temperature to rapidly lower the temperature, thereby rapidly lowering solubility of the polymer in the solvent to derive the polymer to be recrystallized and precipitated at a high speed, using the properties as such. The polymer dissolved in the polymer solution may form crystals densely at a high speed by a rapid temperature decrease and a decreased affinity for the solvent. This means that a precipitate having a very low residual amount of the solvent included in the polymer precipitate may be obtained while the precipitation time of the polymer precipitate is shortened.

When the precipitation temperature is below 0°C, a separate cooling device should be provided in order to control the temperature, and thus, an energy usage amount may be increased, and when the temperature is above 50°C, precipitation ability of cycloalkyl alkyl ether is decreased to lower the precipitation speed of the polymer by recrystallization, resulting in a decreased in the yield of the final recycled polymer.

Meanwhile, the volume of the solvent supplied to the precipitation tank may be 0.5 times to 10 times, specifically 2 times to 8 times or 2 times or 6 times the volume of the polymer solution. When the volume of the solvent in the precipitation tank is less than 0.5 times the volume of the polymer solution, it is difficult to sufficiently lower the temperature of the polymer solution, so that it may be difficult to sufficiently show the precipitation ability of the solvent for the polymer dissolved therein, and when the volume is more than 10 times the polymer solution, economic feasibility may be lowered due to the excessive use of the solvent.

Since the polymer precipitate formed in the precipitation tank is present in a state of being mixed with the solvent included in the added polymer solution and the solvent supplied in advance in the precipitation tank, a process of separating the polymer precipitate with the used solvent is needed.

In addition, the method for preparing recycled polymers according to an exemplary embodiment may include: (S4) filtering the solution including the polymer precipitate to separate the solvent from the solution, thereby obtaining the polymer precipitate.

The filtration may be performed by one or more of filtration by reduced pressure, filtration by press, filtration by a filter, filtration by centrifugation, and filtration by settling. Among them, the reduced pressure filtration and the press filtration may be favorably applied in terms of minimizing a solvent residual amount contained in the polymer precipitate.

The polymer precipitate obtained by the filtration may include polyethylene, polypropylene, or a mixture thereof. In addition, the polymer precipitate may include 40 to 80 wt% or 43 to 68 wt% of a solid content (polymer), based on the weight. That is, a first residual solvent amount which is a residual solvent amount contained in the polymer precipitate may be an amount obtained by subtracting the content (weight) of the polymer (solid content) from the polymer precipitate, and the first residual solvent amount may be 20 wt% to 60 wt% or 32 to 57 wt%, based on the weight of the polymer precipitate. The polymer precipitate may be dried to obtain the recycled polymer, and as the first residual solvent amount is increased, excessive energy may be consumed for drying the polymer precipitate.

Further, the filtered polymer precipitate may be used as the recycled polymer after a drying process.

For example, the drying of the polymer precipitate may be performed through heating by hot air or heat conduction, and for example, may be performed using a flow drying device such as a kneader reactor. In the flow drying device, a separate solvent recovery device for recovering a residual solvent removed from the polymer precipitate may be connected, and the polymer precipitate which is dried in the device may be used as the recycled polymer.

The solvent separated by the filtration and the residual solvent recovered by drying the polymer precipitate may be recovered and reused in the dissolution tank and the precipitation tank again. Herein, since the solvent recovered after use in the present invention is not a mixed solvent but rather a single solvent, it may be directly reused without a separate separation process such as fractional distillation. Thus, process simplification and cost reduction may be achieved to secure economic feasibility.

In addition, according to an exemplary embodiment of the present invention, recycled polymers prepared by the method for preparing recycled polymers may be included.

The recycled polymers may be recycled polymers obtained by drying after dissolving and precipitating the composite resin in cycloalkyl alkyl ether which is a solvent according to the method for preparing recycled polymers.

The solvent may be completely removed from the recycled polymer, after a drying process of the polymer precipitate obtained in the precipitation process. However, the solvent may remain in a small amount in the drying process, depending on the drying conditions such as a drying temperature, a drying time, and the type of dryers. The residual amount as such may be at a level which does not affect the use of the recycled polymer as a product and may be a degree to which it is difficult to detect the solvent by a common detection method, depending on the content. However, when the solvent is detected, it is recognized that the solvent is used in the process of preparing the recycled polymer.

A second residual solvent amount which is the amount of the solvent remaining in the recycled polymer may not be detected (0 ppm) based on the weight of the recycled polymer, or if detected, may be 10 ppm to 5000 ppm, 10 ppm or 2000 ppm, or 800 ppm to 180 ppm. The second residual solvent amount of 0 ppm means that the solvent is not present. It is preferred that the second residual solvent amount is close to 0 ppm, and when the second residual solvent amount is more than 5000 ppm, the physical properties and the processability of the recovered recycled polymer may be deteriorated.

The solvent remaining in the recycled polymers is the solvent used in the method for preparing recycled polymers and may be cycloalkyl alkyl ether. Specifically, the solvent remaining in the recycled polymer may include one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

### Example 1:

Cyclopentyl methyl ether (CPME) (b.p 106°C) as a solvent was prepared, and 50 ml of CPME was supplied to a dissolution tank and 200 ml of CPME was supplied to a precipitation tank.

A composite resin sample (6.45 g) including 77.89 wt% of polyethylene was supplied to the dissolution tank, and the dissolution tank was heated to dissolve polyethylene included in the composite resin at 110°C which is higher than the boiling point of CPME to obtain a polymer solution (solubility: 6.7%). The dissolution was performed for 180 minutes under stirring.

The polymer solution was filtered through a mesh strainer to separate an insoluble material, and stirring was performed while the polymer solution was added dropwise to the precipitation tank (CPME 200 ml) at room temperature (25°C) at an addition amount of 5 ml/min. The addition amount of the polymer solution was adjusted so that the amount of the solvent CPME was 4 times the volume of the added polymer solution in the precipitation tank. The polymer solution at a high temperature (110°C) was recrystallized by the temperature difference to form a precipitate in the precipitation tank.

The solution of the precipitation tank was filtered under reduced pressure to obtain a polyethylene precipitate, and CPME used for dissolution and precipitation was separated. The polyethylene precipitate was added to a kneader reactor and dried at 120°C to separate a residual solvent, and the dried polyethylene precipitate was used as a recycled polymer. Meanwhile, the solvents separated from the filtration under reduced pressure and the kneader reactor were recovered and reused.

### Example 2:

The process was performed in the same manner as in Example 1, except that, in the dissolution tank, polyethylene included in the composite resin was dissolved at 106°C which is the boiling point of CPME to obtain a polymer solution.

### Reference Example 1:

The process was performed in the same manner as in Example 1, except that, in the dissolution tank, polyethylene included in the composite resin was dissolved at 100°C which is lower than the boiling point of CPME to obtain a polymer solution.

### Reference Example 2:

The process was performed in the same manner as in Example 1, except that, in the dissolution tank, polyethylene included in the composite resin was dissolved at 100°C which is lower than the boiling point of CPME to obtain a polymer solution, and a filtration method was changed to press filtration.

### Example 3:

The process was performed in the same manner as in Example 1, except that a dissolution temperature and a filtration method were changed to those shown in Table 1, while the solvent supplied to the dissolution tank and the precipitation tank was replaced with cyclopentyl ethyl ether (CPEE) (b.p 122°C).

### Example 4:

The process was performed in the same manner as in Example 1, except that a dissolution temperature and a filtration method were changed to those shown in Table 1, while the solvent supplied to the dissolution tank and the precipitation tank was replaced with cyclohexyl methyl ether (CHME) (b.p 135°C).

### Comparative Examples 1 to 4:

The process was performed in the same manner as in Example 1, except that a dissolution temperature, an amount of the solvent supplied to the precipitation tank, or a filtration method was changed to those shown in Table 1, while the solvents supplied to the dissolution tank and the precipitation tank were replaced with methyl cyclohexane (MCH) (b.p 101°C).

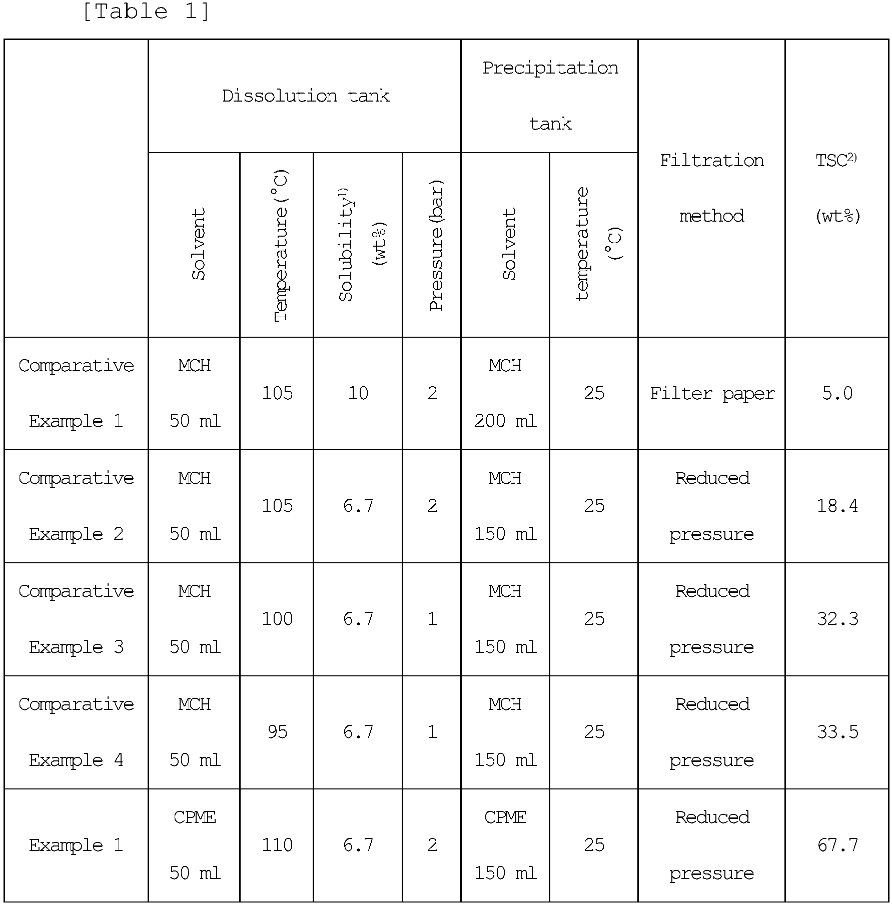

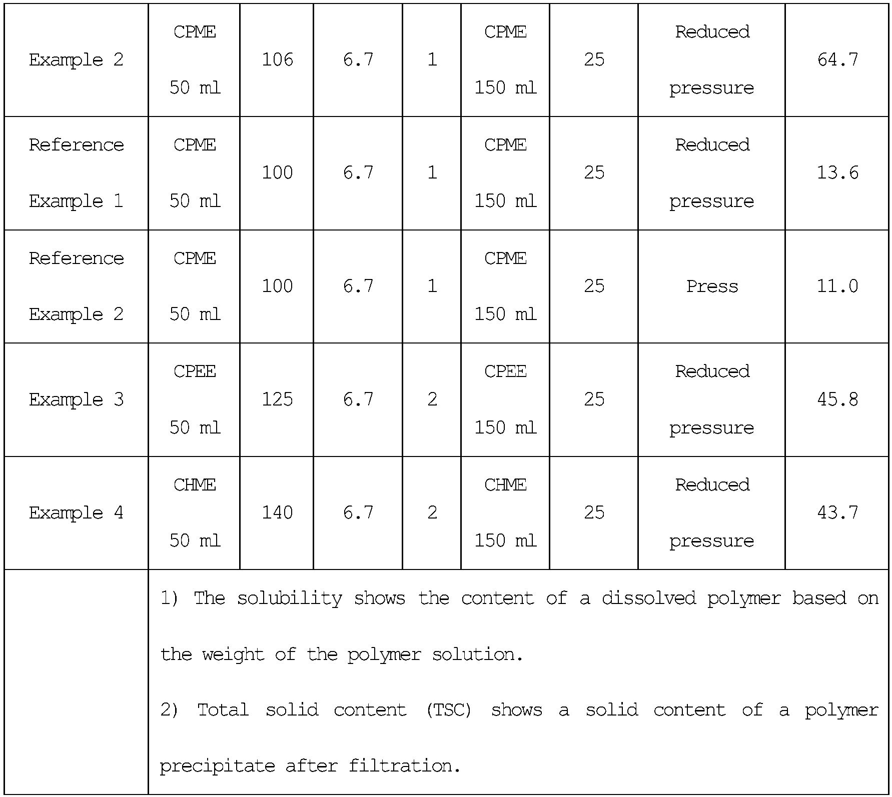

In Table 1, it was confirmed that in Examples 1 to 4 in which CPME (b.p 106°C), CPEE (b.p 122°C), or CHME (b.p 135°C) was used as the solvent for dissolving and recrystallizing polyethylene and the dissolution temperature was at or above the boiling points of each solvent, since the polymer was sufficiently dissolved in the dissolution tank heated to a high temperature and the precipitation temperature maximized a temperature difference from the precipitation tank at room temperature, the solid content in the finally obtained polymer precipitate was increased, but the first residual solvent amount contained in the polymer precipitate was decreased. That is, since the cycloalkyl alkyl ether has sufficient solubility for the polymer at a temperature at or above the boiling point and has a decreased affinity for the polymer at a low temperature, a polymer precipitation effect was excellent, and thus, the polymer precipitate obtained in the precipitation tank had a low solvent residual amount to minimize energy consumed for solvent removal.

Meanwhile, in Reference Examples 1 and 2, the dissolution step was performed at a temperature below the boiling point of CPME used as the solvent, a temperature difference from the precipitation tank (25°C) was decreased to decrease the solid content in the finally obtained polymer precipitate.

In Comparative Examples 1 to 4, MCH (b.p 101°C) was used as the solvent for dissolution and recrystallization, and as a result, it was confirmed that though the polymer was dissolved at a temperature near the boiling point of the solvent and then the precipitation step was performed, the solid content of the finally obtained polymer precipitate was low and the solvent residual amount was high. This shows that since MCH has better solubility for the polymer than CPME but has a high affinity for the polymer at a low temperature, its polymer precipitation ability was poor.

An experiment for detecting the residual solvent amount (second residual solvent amount) was performed on the recycled polymers obtained in Examples 1 to 4.

The recycled polymers obtained in Examples 1 to 4 were obtained by drying the polymer precipitate in a vacuum oven at 100°C for 12 hours.

The amount of the solvent in the recycled polymer was measured using liquid chromatography (LC) equipment, and the measured second residual solvent amount is shown in Table 2.

**[Table 2]**

| Classification | Second residual solvent amount (ppm) |
|---|---|
| Example 1 | 800 |
| Example 2 | 700 |
| Example 3 | 1500 |
| Example 4 | 1800 |

In Table 2, the residual amount (ppm) in Example 1 to 4 is the second residual solvent amount of the recycled polymer obtained in each example shown as parts per million (ppm) to the weight of the recycled polymer.

Referring to Table 2, the solvent amount remaining in the recycled polymer was 700 ppm to 1800 ppm, and it was confirmed that only a very small amount remained. The numerical value as such is a value which does not affect the physical properties or processability at all in using the recycled polymer. However, since the solvent used for preparing the recycled polymer was detected, it may be used as an indicator to determine what solvent was used for the preparation of the recycled polymer.

## Claims

1. A method for preparing recycled polymers, the method comprising:
(S1) supplying cycloalkyl alkyl ether as a solvent to a dissolution tank and a precipitation tank, respectively;
(S2) supplying a composite resin to the dissolution tank, heating to a dissolution temperature, and dissolving a polymer included in the composite resin while maintaining the dissolution tank at the dissolution temperature to obtain a polymer solution;
(S3) supplying the polymer solution to the precipitation tank in which the solvent is maintained at a precipitation temperature and precipitating the polymer included in the polymer solution to obtain a solution including a polymer precipitate; and
(S4) filtering the solution including the polymer precipitate to obtain the polymer precipitate.

2. The method for preparing the recycled polymers of claim 1, wherein the composite resin is used after washing, drying, and crushing a waste resin formed of a resin composition of two or more polymers blended or a single polymer containing an additive.

3. The method for preparing the recycled polymers of claim 1, wherein the cycloalkyl alkyl ethers includes one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether.

4. The method for preparing the recycled polymers of claim 1, wherein the dissolution temperature is 90°C to 140°C.

5. The method for preparing the recycled polymers of claim 1, wherein the polymer solution includes 1 to 20 wt% of the polymer based on the weight of the polymer solution.

6. The method for preparing the recycled polymers of claim 1, wherein (S2) further includes: performing filtration in order to remove an insoluble material from the polymer solution.

7. The method for preparing the recycled polymers of claim 1, wherein the precipitation temperature is lower than the dissolution temperature by 70 to 130°C.

8. The method for preparing the recycled polymers of claim 1, wherein the precipitation temperature is -40 to 70°C.

9. The method for preparing the recycled polymers of claim 1, wherein a volume of the solvent supplied to the precipitation tank is 0.5 times to 10 times a volume of the polymer solution.

10. The method for preparing the recycled polymers of claim 1, wherein the polymer precipitate includes 40 to 80 wt% of the polymer based on the weight of the polymer precipitate.

11. The method for preparing the recycled polymers of claim 1, wherein the polymer precipitate includes **a polymer** selected from polyethylene, polypropylene, or a mixture thereof.

12. Recycled polymers comprising cycloalkyl alkyl ether as a residual component.

13. The recycled polymers of claim 12, wherein the cycloalkyl alkyl ether includes one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether.

14. The recycled polymer of claim 12, wherein the cycloalkyl alkyl ether remains at 10 ppm to 5000 ppm to the weight of the recycled polymer.
